# EUROPÄISCHE PATENTSCHRIFT

(11) **EP 0 984 176 B1**
(45) Veröffentlichungstag und Bekanntmachung des Hinweises auf die Patenterteilung: **07.03.2001**
(21) Anmeldenummer: 98115536.9
(22) Anmeldetag: 18.08.1998
(51) Int. Cl.: F16B 31/02, H01R 4/30

(54) **Abreisskopfschraube**
Bolt with shearable head
Boulon à tête frangible

(43) Veröffentlichungstag der Anmeldung: 08.03.2000
(73) Patentinhaber: GERHARD PETRI GmbH & CO. KG ELEKTROTECHNISCHE FABRIK, D-95028 Hof (DE)
(72) Erfinder: Hardt, Falk; Dipl.-Ing., 95213 Münchberg (DE); Markgraf, Volker, 95195 Röslau (DE)
(74) Vertreter: Strobel, Wolfgang, Dipl.-Ing.

(56) Entgegenhaltungen:
- EP-A- 0 634 811
- EP-A- 0 692 643
- GB-A- 2 140 523
- GB-A- 2 281 599
- GB-A- 2 299 640

## Beschreibung

Die vorliegende Erfindung betrifft eine Abreißkopfschraube nach dem Oberbegriff des Anspruchs 1.

Zum Verbinden, Abzweigen und Anschließen von Kabeln, insbesondere Erdkabeln werden herkömmlicherweise Schraubverbinder, Kabelverbindungsklemmen oder Kabelschuhe verwendent, in die zur Festlegung bzw. Kontaktierung der Leiter Abreißkopfschrauben eingesetzt werden.

Aus der WO 96/31706 ist eine Abreißkopfschraube bekannt, die mehrere Gewindeabschnitte und einen Kopfabschnitt aufweist, der mit den Gewindeabschnitten über eine Sollbruchstelle verbunden ist und zwischen den Gewindeabschnitten weitere Sollbruchstellen in Form von Querschnittsverjüngungen vorgesehen sind. Die Sollbruchstellen sind dabei so ausgestaltet, daß die vom Kopf entferntest liegende Sollbruchstelle die stärkste Querschnittsverjüngung aufweist, wohingegen die dem Kopf am nächsten liegende Stelle die geringste Querschnittsverjüngung oder Einschnittiefe aufweist. Aufgrund dieser Ausgestaltung ergibt sich ein stets von dem vom Kopfabschnitt entferntest gelegenen Gewindeabschnitt zum Kopfabschnitt hin ansteigendes Abreißdrehmoment.

Dies hat jedoch mehrere Nachteile. Je weniger die Abreißkopfschraube in den Kabelverbinder eindringt, um den darin eingelegten Leiter zu klemmen, desto geringer ist das entsprechende Abreißdrehmoment, d. h. entsprechend geringer ist die Anpresskraft. Das bedeutet, daß für die größten Leiter die geringste Anpresskraft und für die kleinsten Leiter die größte Anpresskraft vorhanden ist. Im einen Fall, nämlich der geringsten Anpresskraft, besteht die Gefahr, daß der Leiter nicht ausreichend geklemmt ist und damit die Gefahr eines mangelnden Kontakts besteht, wohingegen im anderen Extremfall, dem kleinsten Leiter mit größtem Anpressdruck ein Verquetschen des kleinsten Leiters möglich sein kann, was zum Versagen der Kabelverbindung führen kann.

Eine ähnliche Abreißkopfschraube ist aus der EP 0 692 643 A1 bekannt, bei der die Abreißdrehmomente aller Sollbruchstellen vom Kopfabschnitt zum letzten bzw. vordersten Gewindeabschnitt zu oder abnehmen sollen. Gegebenenfalls sind sie aber im wesentlichen gleich groß. Im Falle des Abnehmens ergeben sich die vorgenannten Nachteile. Im Falle des Zunehmens besteht die Gefahr, daß die Abreißkopfschraube vor Erreichen des für den jeweiligen Leiter notwendige Abreißdrehmoment abreißt und nicht nur ein gegebenenfalls ungenügendes Klemmen des Leiters erzeugt, sondern auch ein sehr nachteiliges Hervorstehen des abgebrochenen verbleibenden Abschnitts der Abreißkopfschraube über die Außenkontur der Kabelklemme mit sich bringt.

Der vorliegenden Erfindung liegt deshalb die Aufgabe zugrunde, eine Abreißkopfschraube der eingangs genannten Art derart zu verbessern, daß die Nachteile des Standes der Technik überwunden werden und eine Abreißkopfschraube geschaffen wird, die für eine Vielzahl unterschiedlicher Querschnittsgrößen von Kabelleitern ein optimales Klemmen und Abreißen ermöglicht.

Diese Aufgabe wird durch die Merkmale des Anspruchs 1 gelöst.

Dadurch, daß wenigstens eine Stufen-Sollbruchstelle gebildet wird, indem ihr Abreißdrehmoment kleiner ist als das der vom Kopfabschnitt weiter entfernten Sollbruchstelle und größer als das der zum Kopfabschnitt hin näheren nächsten Sollbruchstelle, dadurch, daß das Abreißdrehmoment der Sollbruchstellen auf den Abschnitten ohne Stufen-Sollbruchstelle in Richtung Kopfabschnitt hin stetig zunimmt, und dadurch, daß an der Stufen-Sollbruchstelle ein anderes Werkzeug angreift als an den vom Kopfabschnitt entfernteren Gewindeabschitten, wird erreicht, daß einerseits ein korrekter Eingriff und ein sicheres Abreißen an der gewünschten Stelle sichergestellt wird und andererseits zu hohe Drehmomente bei kleinen Leiterquerschnitten vermieden werden.

Vorzugsweise weist der Kopfabschnitt als Werkzeugangriffsfläche ein Außensechskant auf und ist eine Innenausnehmung, beispielsweise einen Innensechskant (ISK, Torx, etc.), vorgesehen, die sich vom Kopfabschnitt bis in den Gewindeabschnitt unterhalb der Stufen-Sollbruchstelle erstreckt. Damit wird sichergestellt, daß für die unterhalb der Stufen-Sollbruchstelle sich befindenden Sollbruchstellen das in die Innenausnehmung eingeführte Werkzeug das Abreißdrehmoment aufbringt, wohingegen für die oberhalb liegenden Sollbruchstellen der Kopfabschnitt das Abreißdrehmoment aufbringt.

Mit besonderem Vorteil läßt sich eine entsprechende Anpassung an die verschiedenen Leiterquerschnitte zusätzlich dadurch erreichen, daß die Höhe der Gewindeabschnitte beliebig ist. Entsprechend flexibel und exakt kann dadurch die Abreißkopfschraube mit ihrem Sollbruchstellen an die Querschnitte der Kabelleiter angepaßt werden, die sich nach der Normung nicht kontinuierlich, sondern stufenweise verändern.

Ein weiterer Vorteil der vorliegenden Erfindung ergibt sich daraus, daß die Abreißkopfschraube 3 bis 10, vorzugsweise 4 bis 8, Sollbruchstellen aufweist, von denen wenigstens eine als Stufen-Sollbruchstelle ausgebildet ist. Dies schafft vorteilhafterweise die erhebliche Flexibilität und Anpassungsfähigkeit der Abreißkopfschraube an die verschiedensten Anwendungen, insbesondere an die verschiedensten Leiterquerschnitte, die mit Hilfe der erfindungsgemäßen Abreißkopfschraube sicher geklemmt werden können, und der Abreißkopf an der richtigen Sollbruchstelle abreißt.

Weitere Einzelheiten, Merkmale und Vorteile der Erfindung ergeben sich aus der nachfolgenden Beschreibung unter Bezugnahme auf die Zeichnungen. Darin zeigt:
- Figur 1: eine Seitenansicht einer ersten Ausführungsform der erfindungsgemäßen Abreißkopfschraube;
- Figur 2: eine Schnittansicht durch die Abreißkopfschraube von Figur 1;
- Figur 3: eine zweite Ausführungsform der erfindungsgemäßen Abreißkopfschraube in Seitenansicht;
- Figur 4: eine Schnittansicht durch die Abreißkopfschraube von Figur 3;
- Figur 5: eine dritte Ausführungsform der erfindungsgemäßen Abreißkopfschraube in Seitenansicht; und
- Figur 6: eine Schnittansicht durch die Abreißkopfschraube von Figur 5.

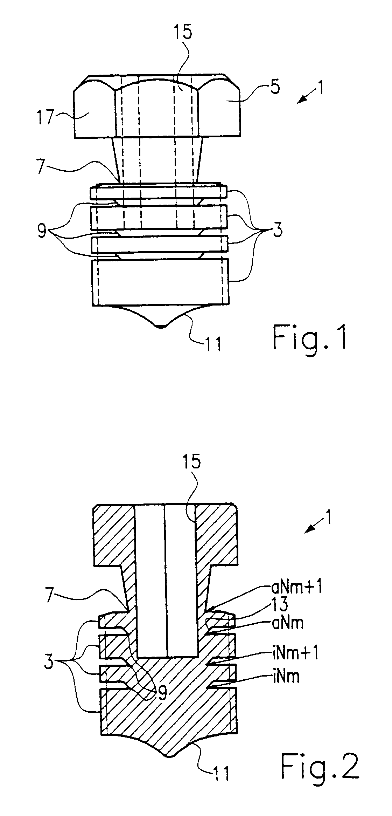

In den Figuren 1 und 2 ist eine erste Ausführungsform der erfindungsgemäßen Abreißkopfschraube dargestellt. Die Abreißkopfschraube 1 weist mehrere Gewindeabschnitte 3 und einen Kopfabschnitt 5 auf. Zwischen dem Kopfabschnitt 5 und dem nächstliegenden Gewindeabschnitt 3 ist eine erste Sollbruchstelle 7 vorgesehen. Zwischen den Gewindeabschnitten 3 sind weitere Sollbruchstellen 9 vorgesehen.

Wie ersichtlich können die Gewindeabschnitte 3 unterschiedliche Höhe bzw. Stärke aufweisen. Der unterste Gewindeabschnitt weist weiterhin eine Kabelauflagefläche 11 auf, die dann das Klemmen bei eingeschraubter Abreißkopfschraube bewirkt.

Der Aufbau der Sollbruchstelle geht insbesondere deutlich aus Figur 2 hervor. Wie dargestellt, ergeben sich an den einzelnen Sollbruchstellen 9, bzw. der ersten Sollbruchstelle 7 die Abreißdrehmomente iNm, iNm+1, aNm und aNm+1. Dabei ist die Anordnung so zu verstehen, daß durch das "+1" angegeben ist, daß dieses Abreißdrehmoment gegenüber dem vorherigen ansteigt bzw. größer ist.

Die Sollbruchstelle mit Drehmoment aNm kann auch als Stufen-Sollbruchstelle 13 bezeichnet werden. Das Abreißdrehmoment aNm ist gegenüber dem vorherigen iNm+1 reduziert.

Wie weiterhin ersichtlich, erstreckt sich eine Innenausnehmung 15, beispielsweise eine Innensechskantausnehmung, durch den Kopfabschnitt bis in den Gewindeabschnitt 3 hinein, der unterhalb der Stufen-Sollbruchstelle 13 liegt. Zum Kopfabschnitt 5 hin steigt dann das Drehmoment in der Sollbruchstelle 7 wieder an.

Wie weiterhin ersichtlich, weist der Kopfabschnitt 5 eine weitere Werkzeugangriffsfläche 17 in Form eines Außensechskants auf.

Gemäß der Darstellung von Figur 2 ergibt sich somit der Zusammenhang, daß die Sollbruchstellen mit den Drehmomenten "i" mittels der Innenausnehmung abgerissen werden, während die Sollbruchstellen mit dem Abreißdrehmoment "a" mit dem Außensechskant 17 abgerissen werden können.

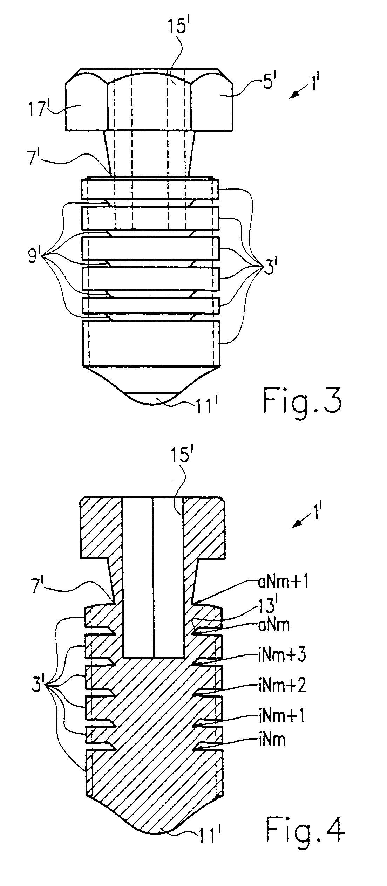

In den Figuren 3 und 4 ist eine zweite Ausführungsform der erfindungsgemäßen Abreißkopfschraube dargestellt. Dabei sind die Elemente, die den Elementen von Figur 1 und 2 entsprechend mit dem Zusatz "'" versehen. Die Ausführungsform gemäß Figuren 3 und 4 weist sechs Sollbruchstellen auf, eine erste 7' und weitere fünf 9', von denen eine die Stufen-Sollbruchstelle 13' ist. Von den sechs Sollbruchstellen werden die vier unteren mit Innensechskant 15' betätigt und die beiden oberen Sollbruchstellen mit dem Außensechskant 17'.

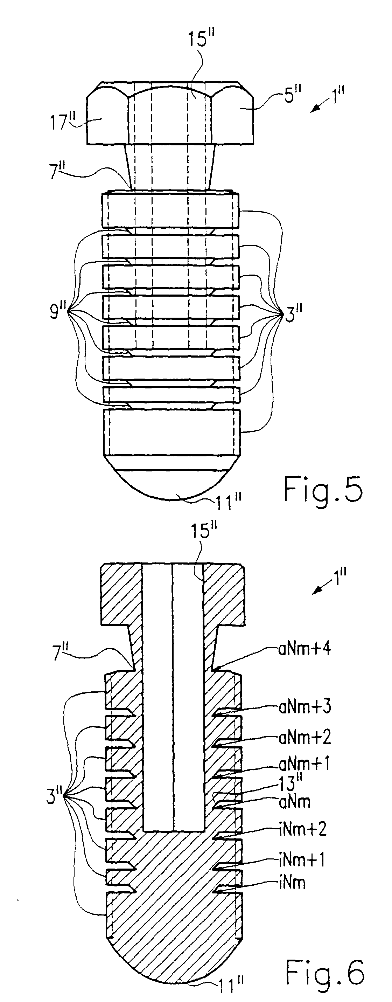

In den Figuren 5 und 6 ist eine dritte Ausführungsform der erfindungsgemäßen Abreißkopfschraube 1'' dargestellt. Gleiche Elemente zu den vorhergehenden sind diesmal mit dem Zusatz "''" bezeichnet. Die Abreißkopfschraube 1'' weist acht Sollbruchstelle und dementsprechend acht Gewindeabschnitte 3'' auf. Wie ersichtlich sind die Höhe bzw. Dicken der Gewindeabschnitte 3'' deutlich unterschiedlich zueinander.

Drei der Sollbruchstellen werden mit dem Innensechskant 15'' betätigt, wohingegen fünf der Sollbruchstellen mit dem Außensechskant 17'' betätigt werden.

Daraus ist ersichtlich, daß eine sehr unterschiedliche Anordnung der Sollbruchstellen möglich ist, d. h. die Stufen-Sollbruchstelle kann an den unterschiedlichsten Sollbruchstellen vorgesehen werden.

Die vorliegende Erfindung ist nicht auf die dargestellten Ausführungsformen beschränkt. Beispielsweise können mehreren Stufen-Sollbruchstellen vorgesehen werden, wobei das Abreißdrehmoment der vom Kopfabschnitt weiter entfernten Stufen-Sollbruchstelle größer ist als das der dem Kopfabschnitt näher liegenden Stufen-Sollbruchstelle.

## Patentansprüche

1. Abreißkopfschraube (1; 1'; 1") mit mehreren Gewindeabschnitten (3; 3'; 3") und einem Kopfabschnitt (5; 5'; 5"), der mit den Gewindeabschnitten (3; 3'; 3") über eine erste Sollbruchstelle (7; 7'; 7") verbunden ist und zwischen den Gewindeabschnitten (3; 3'; 3") weitere Sollbruchstellen (9; 9'; 9") in Form von Querschnittsverjüngungen vorgesehen sind,
dadurch gekennzeichnet,
daß wenigstens eine Stufen-Sollbruchstelle (13; 13'; 13") dadurch gebildet wird, daß ihr Abreißdrehmoment (aNm) kleiner ist als das der vom Kopfabschnitt (5; 5'; 5") weiter entfernten nächsten Sollbruchstelle, und daß das Abreißdrehmoment (aNm+1) der nächsten, zum Kopfabschnitt (5; 5'; 5") hin näheren Sollbruchstelle in Bezug auf das Abreißdrehmoment (aNm) der Stufen-Sollbruchstelle (13; 13'; 13") wieder ansteigt,
daß das Abreißdrehmoment der Sollbruchstellen (9; 9'; 9") auf den Abschnitten ohne Stufen-Sollbruchstelle (13; 13'; 13") in Richtung Kopfabschnitt (5; 5'; 5") stetig zunimmt, und
daß an der Stufen-Sollbruchstelle (13; 13'; 13") ein anderes Werkzeug angreift als an den vom Kopfabschnitt (5; 5'; 5") entfernteren Gewindeabschnitten.

2. Abreißkopfschraube (1; 1'; 1") nach Anspruch 1, dadurch gekennzeichnet, daß der Kopfabschnitt (5; 5'; 5") eine Werkzeugangriffsfläche (17; 17'; 17"), vorzugsweise in Form eines Außensechskantabschnitts, aufweist, und daß eine Innenausnehmung (15; 15'; 15"), beispielsweise ein Innensechskant, vorgesehen ist, die sich vom Kopfabschnitt (5; 5'; 5") bis in den Gewindeabschnitt unterhalb der Stufen-Sollbruchstelle (13; 13'; 13") erstreckt.

3. Abreißkopfschraube (1; 1'; 1") nach Anspruch 1 oder 2, dadurch gekennzeichnet, daß die Höhe der Gewindeabschnitte (3; 3'; 3") beliebig ist.

4. Abreißkopfschraube (1; 1'; 1") nach einem der Ansprüche 1 bis 3, dadurch gekennzeichnet, daß sie drei bis zehn, vorzugsweise vier bis acht Sollbruchstellen (9; 9'; 9") aufweist, von denen wenigstens eine als eine Stufen-Sollbruchstelle (13; 13'; 13") ausgebildet ist.

## Claims

1. A breakaway-head screw (1; 1'; 1") having a plurality of screwthreaded portions (3; 3'; 3") and a head portion (5; 5'; 5") which is connected to the screwthreaded portions (3; 3'; 3") via a first predetermined breaking point (7; 7'; 7") and further predetermined breaking points (9; 9'; 9") in the form of cross-section constrictions are provided between the screwthreaded portions (3; 3'; 3"), characterised in that
at least one stepped predetermined breaking point (13; 13'; 13") is formed by its breakaway torque (aNm) being smaller than that of the next predetermined breaking point further away from the head portion (5; 5'; 5") and the breakaway torque (aNm+1) at the next predetermined breaking point closer to the head portion (5; 5'1; 5") rising again with respect to the breakaway torque (aNm) of the stepped predetermined breaking point (13; 13'; 13"),
in that the breakaway torque of the predetermined breaking points (9; 9'; 9") on the portions without the stepped predetermined breaking point (13; 13'; 13") increases continuously in the direction of the head portion (5; 5'; 5") and
in that a different tool engages the stepped predetermined breaking point (13; 13'; 13") than the tool engaging the screwthreaded portion more remote from the head portion (5; 5'; 5").

2. A breakaway-head screw (1; 1'; 1") according to claim 1, characterised in that the head portion (5; 5'; 5") has a tool engagement surface (17; 17'; 17"), preferably in the form of an externally hexagonal portion, and in that an internal recess (15; 15'; 15"), for example an internal hexagon, is provided, which extends from the head portion (5; 5'; 5") into the screwthreaded portion beneath the stepped predetermined breaking point (13; 13'; 13").

3. A breakaway-head screw (1; 1'; 1") according to claim 1 or 2, characterised in that the screwthreaded portions (3; 3'; 3") are of any desired height.

4. A breakaway-head screw (1; 1'; 1") according to any one of claims 1 to 3, characterised in that it comprises three to ten, preferably four to eight predetermined breaking points (9; 9'; 9"), at least one of which is constructed as a stepped predetermined breaking point (13; 13'; 13").

## Revendications

1. Vis à tête arrachable (1; 1'; 1") comportant plusieurs sections filetées (3; 3'; 3") et une section de tête (5; 5'; 5") qui est reliée aux sections filetées (3; 3'; 3") par l'intermédiaire d'une première zone de rupture (7; 7'; 7"), tandis que d'autres zones de rupture (9; 9'; 9"), se présentant sous forme de parties à section transversale rétrécie, sont prévues entre les sections filetées (3; 3'; 3"),
caractérisée
en ce qu'au moins une zone de rupture de saut (13; 13'; 13") est formée par le fait que son couple d'arrachement (aNm) est inférieur à celui de la zone de rupture suivante plus éloignée de la section de tête (5; 5'; 5") et que le couple d'arrachement (aNm+1) de la zone de rupture suivante plus proche de la section de tête (5; 5'; 5") croît de nouveau par rapport au couple d'arrachement (aNm) de la zone de rupture de saut (13; 13'; 13"),
en ce que le couple d'arrachement des zones de rupture (9; 9'; 9") situées sur les sections dépourvues de zone de rupture de saut (13; 13'; 13") croît constamment en direction de la section de tête (5; 5'; 5") et
en ce que, sur la zone de rupture de saut (13; 13'; 13"), on utilise un outil autre que celui dont on se sert sur les sections filetées éloignées de la tête de la section de tête (5; 5'; 5").

2. Vis à tête arrachable (1; 1'; 1") suivant la revendication 1, caractérisée en ce que la section de tête (5; 5'; 5") comporte une surface d'action d'outil (17; 17'; 17"), se présentant de préférence sous forme d'une section à six-pans extérieure, et en ce qu'il est prévu un évidement intérieur (15; 15'; 15"), par exemple un six-pans intérieur, qui s'étend de la section de tête (5; 5'; 5") jusque dans la section filetée située au-dessous de la zone de rupture de saut (13; 13'; 13").

3. Vis à tête arrachable (1; 1'; 1") suivant la revendication 1 ou 2, caractérisée en ce que la hauteur des sections filetées (3; 3'; 3") est quelconque.

4. Vis à tête arrachable (1; 1'; 1") suivant l'une des revendications 1 à 3, caractérisée en ce qu'elle comporte trois à dix, de préférence quatre à huit, zones de rupture (9; 9'; 9") dont au moins l'une est réalisée de façon à servir de zone de rupture de saut (13; 13'; 13").
